Europäisches Patentamt

European Patent Office

Office européen des brevets

(19)

(11) **EP 1 505 575 A1**

(12) # EUROPEAN PATENT APPLICATION

(43) Date of publication:
**09.02.2005 Bulletin 2005/06**

(51) Int Cl.⁷: **G11B 5/706**

(21) Application number: **04018298.2**

(22) Date of filing: **02.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **04.08.2003 JP 2003285583**

(71) Applicant: **Fuji Photo Film Co., Ltd.**
**Kanagawa (JP)**

(72) Inventors:
• **Hattori, Yasushi**
  **Odawara-shi Kanagawa (JP)**
• **Waki, Koukichi**
  **Odawara-shi Kanagawa (JP)**

(74) Representative: **HOFFMANN - EITLE**
**Patent- und Rechtsanwälte**
**Arabellastrasse 4**
**81925 München (DE)**

(54) **Magnetic recording medium**

(57)    The present invention provides a magnetic recording medium sequentially having a magnetic layer, a protective layer and a lubricant layer, on a substrate, and the magnetic layer contains magnetic particles having ferromagnetic ordered alloys having a CuAu or $Cu_3Au$ crystal structure in a metal oxide matrix. The protective layer preferably contains at least one of carbon and silicon, and the lubricant layer preferably contains fluorine. The invention provides a magnetic recording medium having a high film strength with a magnetic layer having a high adhesion to the substrate, and exhibiting good electromagnetic conversion characteristics.

**Description**

BACKGROUND OF THE INVENTION

Field of the Invention

The present invention relates to a magnetic recording medium.

Description of the Related Art

It is important to reduce the size of magnetic particles contained in magnetic layers for increasing magnetic recording density of a magnetic recording medium. In the magnetic recording media widely used for, for example, video tapes, computer tapes, disks and the like, if a mass of a ferromagnetic body remains the same, noise is reduced by reducing the particle size.

Materials that are promising for improving the magnetic recording density include ferromagnetic ordered alloys having a CuAu or $Cu_3Au$ crystal structure(which may be simply referred as "ferromagnetic ordered alloys" hereinafter). A ferromagnetic ordered alloy has a large crystalline magnetic anisotropy due to distortion generated by ordering, and it has been known that a ferromagnetic property is exhibited even if the size of magnetic particles is reduced (see, for example, Japanese Patent Application Laid-Open (JP-A) Nos. 2002-157727, 2003-73705 and 2003-113401, and U. S. Patent Nos. 6,262,129 and 6,302,940).

Recording and reproduction by rotating the magnetic recording medium is necessary in some magnetic recording media using a ferromagnetic ordered alloy. Annealing is also required for forming the ferromagnetic ordered alloy. However, the surface of the magnetic recording medium may be roughened by fusion of the magnetic particles by annealing, and recording and reproduction by rotating the magnetic recording medium may be difficult due to insufficient film strength of the magnetic layer.

SUMMARY OF THE INVENTION

Accordingly, in consideration of the foregoing, the present invention provides a magnetic recording medium comprising a magnetic layer having a ferromagnetic property, high film strength and good adhesion with a substrate.

The invention provides a magnetic recording medium sequentially comprising a magnetic layer, a protective layer and a lubricant layer, on a substrate, the magnetic layer containing magnetic particles comprising ferromagnetic ordered alloys having a CuAu or $Cu_3Au$ crystal structure in a metal oxide matrix.

Since the magnetic recording medium of the present invention has a ferromagnetic property, high film strength and good adhesion with a substrate, it can display excellent properties in practical use.

DETAILED DESCRIPTION OF THE INVENTION

Magnetic Recording Medium

The magnetic recording medium of the present invention comprises a magnetic layer, protective layer and lubricant layer formed on a substrate in this order, and contains magnetic particles having ferromagnetic ordered alloys having a CuAu or $Cu_3Au$ crystal structure in a metal oxide matrix constituting the magnetic layer.

Examples of such a magnetic recording medium include magnetic tapes such as video tapes and computer tapes, and magnetic disks such as floppy (R) disks and hard disks.

The metal oxide matrix is preferably nonmagnetic. Forming the nonmagnetic metal oxide matrix can prevent magnetic particles having a single magnetic domain structure from contacting each other to reduce transition noise caused by magnetic recording.

The nonmagnetic metal oxide matrix preferably comprises at least one kind of matrix agent selected from a group consisting of silica, titania, and polysiloxane. Specific examples thereof preferably include organo-silica sol (for example silica sol manufactured by Nissan Chemical Industries, Ltd., and nanotech $SiO_2$ (trade name, manufactured by C.I. Kasei Co.), organo-titania sol (for example nanotech $TiO_2$ (trade name, manufactured by C.I. Kasei Co.), and silicone resins (for example Torefil R910 (trade name) manufactured Toray Industries, Inc.). The materials above are particularly effective for enhancing scratch resistance and adhesion of the magnetic layer.

Various known additives may be added in the magnetic layer, so long as the matrix agent is the main component thereof.

The magnetic recording medium of the invention comprises the magnetic layer formed on a substrate, which contains the magnetic particles having ferromagnetic ordered alloys having a CuAu or $Cu_3Au$ crystal structure in the metal oxide matrix.

Forming the magnetic layer containing the magnetic particles in the metal oxide matrix permits scratch resistance of the magnetic layer and adhesion of the magnetic layer with the substrate to be enhanced while the magnetic layer has a high coercive force.

Since the metal oxide matrix serves as a binder, the magnetic layer is able to maintain high adhesion with the substrate after applying an annealing treatment for transforming the magnetic particles into ferromagnetic ordered alloy particles. Since a strong magnetic layer is formed without changing the constitution of the metal oxide matrix even when the annealing treatment is carried out, scratch resistance can be improved by suppressing reduction in the film strength due to carbonization of organic dispersants and polymers.

Since the magnetic particles contained in the metal oxide matrix are not coagulated, thereby enabling a highly dispersed state to be maintained, the magnetic particles can efficiently exhibit ferromagnetic properties.

The amount of the matrix agent to be add is 1 to 50% by volume, preferably 2 to 30% by volume, and more preferably 3 to 20% by volume, with respect to the total volume of the magnetic particles. The method for forming the magnetic layer will be described in "the method for producing the magnetic recording layer" hereinafter.

Wear resistance is improved by forming a protective layer on the magnetic layer, and a sufficiently reliable magnetic recording medium can be formed by enhancing lubricity by applying a lubricant on the protective layer.

Examples of the material of the protective layer include oxides such as silica, alumina, titania, zirconia, cobalt oxide and nickel oxide; nitrides such as titanium nitride, silicon nitride and boron nitride; carbide such as silicon carbide, chromium carbide and boron carbide; and carbon such as graphite and amorphous carbon, the material preferably contains at least one of carbon (C) and silicon (Si).

Examples of the material containing at least one of C and Si include Si compounds such as silica and silicon nitride; carbides such as silicon carbide, chromium carbide and boron carbide; and carbon such as graphite and amorphous carbon. Hard amorphous carbon, which is referred to as diamond-like carbon is particularly preferable. The protective layer may be formed of a sol-gel film containing Si or C.

A carbon protective layer comprising carbon is suitable as the material of the protective layer, since it has a sufficient wear resistance even when it is a very thin film, and causes no seizing on a sliding member.

While sputtering methods are usually used for forming a carbon protective layer in a hard disk, various methods using plasma CVD have been proposed for products that require continuous film deposition such as video tapes. Accordingly, these methods are preferably employed.

Plasma injection CVD (PI-CVD) has a very large film deposition rate among the CVD methods, and it has been reported that the quality of the carbon protective layer obtained is excellent in that it is hard and contains a few pinholes (for example see JP-A Nos. 61-130487, 63-279426 and 3-113824).

A Vickers hardness of the carbon protective layer is preferably 1000 kg/mm$^2$ or more, and more preferably 2000 kg/mm$^2$ or more. The crystal structure is preferably amorphous and non-conductive.

When the carbon protective layer is formed as a diamond-like carbon film, the structure of the film can be confirmed by Raman spectroscopy, or, in other words, by confirming that a peak appears at 1520 to 1560 cm$^{-1}$ by the Raman spectroscopic measurement of the diamond-like carbon film. When the carbon film does not have the diamond-like carbon structure, the peak detected by Raman spectroscopy shifts from the above-mentioned region, and the hardness of the protective layer decreases.

The carbon materials preferably used for forming the carbon protective layer include alkanes such as methane, ethane, propane and butane; alkenes such as ethylene and propylene; alkyns such as acetylene; and various carbon-containing compounds. A carrier gas such as argon and added gases such as hydrogen and nitrogen for improving the film quality may be added.

Electromagnetic conversion characteristics and adhesion to the magnetic layer are deteriorated when the carbon protective layer has a large film thickness, while wear resistance is insufficient when the film thickness is small. Accordingly, the film thickness is preferably 2.5 to 20 nm, and more preferably 5 to 10 nm.

For improving the adhesion of the protective layer to the magnetic layer as a substrate, it is preferable that the surface of the magnetic layer is previously etched with an inert gas or transformed by exposure to a reactive gas plasma such as oxygen.

A lubricant layer is applied on the protective layer for improving running durability and corrosion resistance. Examples of the lubricant added for forming the lubricant layer include hydrocarbon lubricants, fluorine lubricants and EP (extreme pressure) additives known in the art. The lubricant preferably contains fluorine (F).

Examples of the hydrocarbon lubricant include carboxylic acids such as stearic acid and oleic acid; esters such as butyl stearate; sulfonic acids such as octadecylsulfonic acid; phosphate esters such as monooctadecyl phosphate; alcohols such as stearyl alcohol and oleyl alcohol; carboxylic amides such as stearic acid amide; and amines such as stearylamine.

Examples of the fluorine lubricants preferably used in the invention include those in which a part or all of the alkyl groups in the hydrocarbon lubricants are substituted with fluoroalkyl groups or perfluoropolyether groups.

Examples of the perfluoropolyether group include perfluoromethylene oxide polymers, perfluoroethylene oxide polymers, perfluoro-n-propylene oxide polymers $(CF_2CF_2CF_2O)_n$, perfluoroisopropylene oxide polymers $(CF(CF_3)CF_2O)_n$, or copolymers thereof.

The lubricant layer of the invention mainly comprises the fluorine lubricant, and the coating thickness thereof is preferably in a range from 2 to 20 nm, and more preferably in a range from 5 to 10 nm.

Compounds having polar functional groups such as hydroxyl groups, ester groups and carboxyl groups at the terminals of the alkyl group or in the molecules of the hydrocarbon lubricant are suitable for enhancing the effect of reducing the frictional force.

The molecular weight is in a range from 500 to 5,000, and preferably in a range from 1,000 to 3,000. The molecular weight in a range from 500 to 5,000 enables volatility to be kept low and lubricity to be kept high, while adsorption between the slider and disk as well as occurrence of halting of running and head crashing can be prevented.

Commercially available products having trade names FOMBLIN® manufactured by Ausimont Co. and KRYTOX® manufactured by Du Pont K.K. are specific examples of perfluoropolyethers.

Examples of the extreme-pressure additives include phosphate esters such as trilauryl phosphate; phosphite esters such as trilauryl phosphite; thiophosphite esters such as trilauryl thiophosphite and thiophosphate esters; and sulfur EP agents such as benzyl disulfide.

The lubricant may be used alone, or in combination with other compounds. The methods for applying these lubricants on the protective layer include dissolving the lubricant in an organic solvent and then using a wire bar method, photogravure method, spin-coat method or dip-coat method, or alternatively using a vacuum evaporation method.

A rust preventive may be used together with the lubricant. Examples of the rust preventive include nitrogen-containing heterocyclic compounds such as benzotriazole, benzoimidazole, purine and pyrimidine, and derivatives obtained by introducing alkyl side chains to the main frame of these compounds; and nitrogen and sulfur-containing heterocyclic compounds such as benzothiazole, 2-mercaptobenzothiazole, tetrazaindene compounds and thiouracil compounds, and derivatives thereof.

The magnetic layer may be a laminated layer for improving electromagnetic conversion characteristics, or may comprise nonmagnetic layers and known intermediate layers under the magnetic layer.

When the nonmagnetic layer is formed between the substrate and magnetic layer, the nonmagnetic layer preferably contains at least one compound selected from the group consisting of metal alkoxide compounds, metal phenoxide compounds and coupling agents.

The metal alkoxide compound or metal phenoxide compound preferably has at least two reactive compounds that bind to inorganic substances in one molecule.

The coupling agent has at least two reactive groups in the molecule. Cross-links between the organic substance and inorganic substance are formed by allowing one of them to bind to the inorganic substance, and at least one of the remaining groups to bind to the organic substances.

The metal alkoxide compounds, metal phenoxide compounds and coupling agents are collectively called as "nonmagnetic layer compounds" hereinafter.

The nonmagnetic layer compound is preferably represented by the following Formula [I]:

$$M - (R)_n \qquad [I]$$

In the Formula [I], M represents a metal having trivalent or pentavalent atomic valence, and n represents an integer corresponding to the atomic valance of the metal. The plurality of Rs may be the same or different, and at least one of them represents an alkoxy group or a phenoxy group.

While M represents a metal having tri- or pentavalent atomic valence, the metal is selected from IIIA group, IIIB group, IVA group, IVB group, VA group and VB group metals. Examples of the preferable metals are Si, Ge, Sn, Pb, Ti, V, Al, Ga, In, Sb and Bi.

The alkoxy group represented by R is preferably a group having 8 or less carbon atoms. Examples of the group include a methoxy group, an ethoxy group, an isopropoxy group, a n-propoxy group, a t-butoxy group and a n-butoxy group. A plurality of the alkoxy groups in the compound may be the same or different, and the alkoxy group and the phenoxy group may further have other substituents. While the rest of the substituents represented by R may be arbitrarily selected, they are preferably ones having adsorptive groups at terminals thereof and having 8 or less of carbon atoms. Examples of the adsorptive group include - SH, -CN, $-NH_2$, $-SO_2OH$, -SOOH, $-OPO(OH)_2$ and COOH groups.

While specific examples of the nonmagnetic layer compound are listed below, the invention is not restricted to these compounds:

tetraethoxy orthosilane, N-(2-aminiethyl)-3-aminopropylmethyl dimethoxysilane, N-(2-aminiethyl)-3-aminopropyltrimethoxy silane, 3-aminopehnoxydimethylvinyl silane, aminophenyltrimethoxy silane, 3-aminopropyltriethoxy silane, bis(trimethoxysilylpropyl)amine, (p-chrolomethyl)phenyl trimethoxysilane, (3-glycydoxypropyl)trimethoxysilane, titanium dichloride diethoxide, tetraethoxy titanium, tetra-n-butoxy germanium, 3-mercapropropyl triethoxy germanium, 3-methacryloxy propyltriethoxy germanium, aminophneyl aluminum dimethoxide, 3-aminopropyl germanium diethoxide, aminopropyl indium dimethoxyethoxide, tetraisopropoxy tin-isopropanol adduct, 3-glycydoxypropyl triethoxy tin, 3-methacryloxypropyl tri-t-butoxy tin, N-(2-amniethyl)-3-aminopropylmethyl dimethoxy tin, vinyl-tris(2-ethoxymthoxy)lead (IV), 3-methacryloxypropyl tetramethoxy antimony (V), 3-mercaptopropyl bismuth (III) di-t-pentoxide, 3-aminopropyl vanadium dibutoxyde oxide, and aminopropyl indium dimethoxyethoxide, and the like.

A coating solution is prepared by dissolving the nonmagnetic layer compound in a mixed solvent of water and alcohol. The coating solution is applied on the substrate to form the nonmagnetic layer. A pH controlling agent and a binder may be contained in the coating solution, if necessary. While the amount of coating of the nonmagnetic layer compound is arbitrary, it is preferably 0.1 to 10 g/m$^2$. The surface of the substrate is strongly coated with a metal compound by hydrolysis or dehydration condensation of the alkoxy group or the phenoxy group in the nonmagnetic layer compound, and nano-particles applied thereon are also adsorbed. Accordingly, the compound has a high adhesion with the magnetic layer.

The magnetic recording medium of the invention may comprise other layers in addition to the magnetic layer, if necessary. For example, another magnetic layer and/or nonmagnetic layer are preferably provided on the surface at the opposite side from the magnetic layer in the case of a disk. A back layer is preferably provided on an insoluble substrate surface at the opposite side from the magnetic layer in the case of a tape.

A back-coat layer (backing layer) may be provided on the surface of the nonmagnetic substrate having no magnetic layer when the magnetic recording medium is a magnetic tape. The back-coat layer is provided on the surface of the nonmagnetic substrate having no magnetic layer by applying a back-coat layer forming paint in which granular components, such as an abrasive or an antistatic agent, and a binder are dispersed in a known organic solvent.

Various inorganic pigments and carbon black may be used as the granular components. Resins such as nitrocellulose, phenoxy resins, vinyl chloride resins and polyurethane may be used as the binder singly or in a mixture thereof.

A known adhesive layer may be provided on the surface on which the alloy particle-containing solution is coated, or on the surface where the back-coat layer is formed.

The magnetic recording medium of the invention has an average roughness along the center line of the surface of preferably 0.1 to 5 nm, and more preferably 1 to 4 nm, at a cut-off value of 0.25 mm, since it is desirable for a high recording density magnetic recording medium to form the surface having a quite excellent surface smoothness.

Methods for obtaining such surface smoothness include a calender treatment applied on the surface after forming the magnetic layer for obtaining such smooth surface. A varnish treatment may be also applied.

The magnetic recording medium obtained may be punched with a punching machine, or may be cut into a desired size using a cutter.

Method for manufacturing magnetic recording medium

The method for manufacturing the magnetic recording medium of the invention comprises: preparing alloy particles capable of forming the ferromagnetic ordered alloy phase by a liquid or vapor phase method; subjecting the alloy particles prepared to an oxidation treatment; and annealing the alloy particles after oxidation in a non-oxidative atmosphere.

The method for manufacturing the magnetic recording medium of the invention will be described hereinafter with reference to each step above.

Producing alloy particles

The alloy particles converted into magnetic particles by annealing are prepared by the vapor phase or liquid phase method. However, the liquid phase is preferable considering excellent compatibility to mass production. While known various methods may be employed for the liquid phase method, reduction methods as improved methods of the liquid phase methods are preferably employed, and an inverse micelle method is particularly preferable among the reduction methods since the particle diameter can be readily controlled.

Inverse micelle method

The inverse micelle method at least comprises (1) applying a reducing reaction to a mixture of two inverse micelle solutions, and (2) aging the solution at a given temperature after the reducing reaction.

Each step will be described below.

(1) Reduction

An inverse micelle solution (I) is prepared in first by mixing a non-aqueous organic solvent containing a surfactant and an aqueous reductant solution.

An oil-soluble surfactant is used as the surfactant. Specific examples of the surfactant include sulfonic acid surfactants (for example, "Aerosol OT" (trade name, manufactured by Wako Pure chemical Industries, Inc.), quaternary ammonium salt surfactants (for example cetyltrimethylammonium bromide), and ether surfactants (for example pentaethyleneglycol dodecylether).

The content of the surfactant in the non-aqueous organic solvent is preferably 20 to 200 g/liter.

Preferable examples of the non-aqueous organic solvents capable of dissolving the surfactant include alkanes, ethers and alcohols, and the like.

Alkanes having 7 to 12 carbon atoms are preferable. Specific examples of them include heptane, octane, isooctane, nonane, decane, undecane and dodecane.

Preferable examples of the ethers include diethylether, dipropylether and dibutylether.

Preferable examples of the alcohols include ethoxyethanol and ethoxypropanol.

The reductant used as the aqueous reductant solution contains alcohols, polyalcohols, $H_2$, HCHO, $S_2O_6^{2-}$, $H_2PO_2^-$, $BH_4^-$, $N_2H_5^+$ and $H_2PO_3$. These compounds may be used alone, or in combination thereof.

The content of the reductant in the aqueous solution is preferably 3 to 50 moles relative to 1 mole of the metal salt.

The mass ratio of water to the surfactant (water/surfactant) in the inverse micelle solution (I) is preferably 20 or less. The mass ratio of 20 is advantageous for suppressing precipitates from being formed and for making the particle diameter uniform. The mass ratio is preferably 15 or less, more preferably 0.5 to 10.

Then, an inverse micelle (II) is independently prepared by mixing a non-aqueous organic solvent containing the surfactant and an aqueous metal salt solution.

The surfactant and the condition of the non-aqueous organic solvent (the substance used and concentration) are the same a sin preparing the inverse micelle (I).

The inverse micelle solution (II) may be the same as or different from the inverse micelle (I), so long as the condition is within the range above. The mass ratio of water to the surfactant in the inverse micelle solution (II) is also in the same range as that in the inverse micelle solution (I), and the mass ratio of the inverse micelle solution (II) may be the same as or different from the mass ratio of the inverse micelle solution (I).

Preferably, the metal slat contained in the aqueous metal salt solution is appropriately selected so that the magnetic particles to be prepared are able to form ferromagnetic ordered alloys having a CuAu or $Cu_3Au$ crystal structure.

Examples of the ferromagnetic ordered alloys having a CuAu crystal structure include FeNi, FePd, FePt, CoPt and CoAu alloys, and FePd, FePt and CoPt are preferable among them.

Examples of the ferromagnetic ordered alloys having a $Cu_3Au$ crystal structure include $Ni_3Fe$, $FePd_3$, $Fe_3Pt$, $FePt_3$, $CoPt_3$, $Ni_3Pt$, $CrPt_3$ and $Ni_3Mn$, and $FePd_3$, $FePt_3$, $CoPt_3$, $Fe_3Pd$, $Fe_3Pt$ and $Co_3Pt$ are preferable among them.

Specific examples of the metal salt include $H_2PtCl_5$, $K_2PtCl_4$, $Pt(CH_3COCHCOCH_3)_2$, $Na_2PdCl_4$, Pd $(OCOCH_3)_2$, $PdCl_2$, $Pd(CH_3COCHCOCH_3)_2$, $HAuCl_4$, $Fe_2(SO_4)_3$, $Fe(WO_3)_3$, $(NH_4)_3Fe(C_2O_4)_3$, Fe $(CH_3COCHCOCH_3)_3$, $NiSO_4$, $CoCl_2$ and $Co(OCOCH_3)_2$.

The concentration of the metal salt in the aqueous solution is preferably 0.1 to 1000 μmol/ml, more preferably 1 to 100 μmol/ml.

The alloy particles capable of forming the ferromagnetic ordered alloys having a CuAu or $Cu_3Au$ crystal structure, in which base metals and noble metals form an alloy, can be prepared by appropriately selecting the metal salts.

While the alloy particles should be transformed from a disordered phase to an ordered phase by annealing to be described below, a third element such as Sb, Pb, Bi, Cu, Ag, Zn and In are preferably added to the binary alloy for lowering the transform temperature. It is preferable to previously add a precursor of the third element into the metal salt solution. The amount of the third element to be add is preferably 1 to 30 at%, more preferably 5 to 20 at%, relative to the amount of the binary alloy.

The inverse micelle solutions (I) and (II) prepared as described above are mixed with each other. While the mixing method is not particularly restricted, it is preferable to add the inverse micelle solution (II) while the inverse micelle solution (I) is stirred. The temperature for allowing the reducing reaction to proceed after the mixing is preferably constant in a range from -5 to 30°C.

Controlling the reduction temperature in a range from - 5 to 30°C permits the reducing reaction to be prevented from being heterogeneous by condensation of the aqueous phase, while the temperature range above is advantageous for suppressing coagulation or precipitation from occurring. A temperature range of 0 to 25°C is preferable, and a temperature range of 5 to 25°C is more preferable.

The term "constant temperature" as used herein means that the setting temperature T (°C) is in a range from $T \pm 3°C$. The upper limit and lower limit of the temperature T is in the reduction temperature above (-5 to 30°C), even when the accuracy of the temperature is determined as described above.

While the reducing reaction time should be determined depending on the amount of the inverse micelle solution, it is preferably 1 to 30 minutes, more preferably 5 to 20 minutes.

The reducing reaction is preferably proceeded at a stirring rate as high as possible, since the stirring rate largely affect monodispersity of the particle diameter distribution.

Preferably, a stirring device capable of giving a high shear force is used. Practically, the stirring wing basically has a turbine or paddle shape structure, a sharp edge is provided at the end of the wing or at a position in contact with the wing, and the wing is rotated with a motor. Specific examples of such stirring device include a dissolver (manufactured by Tokushu Kika Kogyo Co., Ltd.), Omnimixer (trade name, manufactured by Yamato Scientific Co., Ltd.), and a homogenizer (manufactured by SMT Co., Ltd.). A stable dispersion solution of the monodisperse alloy particles may be prepared by using these devices.

Preferably, at least one dispersant having 1 to 3 amino groups or carboxyl groups is added in at least one of the inverse micelle solutions (I) and (II) in a proportion of 0.001 to 10 mole relative to 1 mole of the alloy particles to be prepared.

Such dispersant permits monodisperse alloy particles to be obtained without coagulation.

When the amount of the dispersant to be add is in a proportion of 0.001 to 10 mole relative to 1 mole of the alloy particles, monodispersibility of the alloy particles is improved, and coagulation of the alloy particles may prevented.

Organic compounds having adsorbing groups to the surface of the alloy particles are preferable as the dispersant. Specific examples of the adsorbent include the compounds having 1 to 3 amino, carboxyl, sulfonic or sulfinic groups. These compounds may be used alone, or in combination thereof.

The compounds contain structural formula represented by $R-NH_2$, $NH_2-R-NH_2$, $NH_2-R(NH_2)-NH_2$, $R-COOH$, $COOH-R-COOH$, $COOH-R(COOH)-COOH$, $R-SO_3H$, $SO_3H-R-SO_3H$, $SO_3H-R(SO_3H)-SO_3H$, $R-SO_2H$, $SO_2H-R-SO_2H$ and $SO_2H-R(SO_2H)-SO_2H$. R in the formula represents a linear, branched or cyclic hydrocarbon.

Oleic acid is a particularly preferable compound as the dispersant. Oleic acid is a known surfactant for stabilizing colloids, and has been used for protecting metal particles such as iron particles. The relatively long chain of oleic acid (for example, oleic acid has a chain having 18 carbon atoms with a length of at most about 20 angstrom (at most 2 mm); oleic acid has one double bond) is able to give a crucial steric hindrance for extinguishing a strong magnetic interaction among the particles.

Similar long chain carboxylic acids such as erucic acid and linoleic acid are used likewise oleic acid (for example, long chain organic acids having 8 to 22 carbon atoms may be used singly or in combination thereof). Oleic acid is preferable since it is readily available from natural resources (for example olive oil). Oleylamine derivatives from oleic acid is also a useful dispersant as oleic acid is.

Metals having a low redox potential such as Co, Fe, Ni and Cr (metals having an redox potential of lower than - 0.2 V (vs. N.H.E)) in the ferromagnetic ordered alloys having a CuAu or $Cu_3Au$ crystal structure are reduced in the reduction as described above, and the metals are considered to be precipitated in a monodisperse state having a minute size. Metals having a high redox potential such as Pt, Pd and Rh (metals having an redox potential of higher than -0.2 V (vs. N.H.E)) are reduced with the metals having a lower redox potential in the temperature increasing and aging thereafter, and are precipitated using the precipitated metals having a lower redox potential as nuclei on the surface thereof. The ionized metals having a lower redox potential are considered to be precipitated by being reduced with the reductant again. The alloy particles capable of forming the ferromagnetic ordered alloys having a CuAu or $Cu_3Au$ crystal structure are obtained by repeating the process above.

(2) Aging

The solution after the reaction is heated to an aging temperature after completing the reducing reaction.

The aging temperature is preferably a constant temperature of 30 to 90°C, and the temperature is higher than the reducing reaction temperature. The aging time is preferably 5 to 180 minutes. Coagulation or precipitation tends to occur when the aging temperature and time shift to a higher side, while the reaction is not completed to cause a change of the composition when the aging temperature and time shift to a lower side. The preferable aging temperature and time are preferably 40 to 80°C and 10 to 150 minutes, respectively, and more preferably 40 to 70°C and 20 to 120 minutes, respectively.

While the term "constant temperature" as used herein has the same meaning as used in the reducing reaction temperature (the "reducing temperature" is changed to an "aging temperature" herein), the aging temperature is preferably 5°C or more, more preferably 10°C or more, higher than the reducing reaction temperature within the aging temperature range (30 to 90°C) described above. The composition as described in the formulation may be readily obtained by adjusting the temperature to be 5°C or more higher than the reducing reaction temperature.

The base metals are precipitated in the aging on the noble metals precipitated in the reduction.

This means that the base metals is reduced only on the noble metals without independently precipitating both kinds of metals to one another. Accordingly, the alloy powders capable of efficiently produce the ferromagnetic ordered alloys having a CuAu or $Cu_3Au$ crystal structure can be obtained in a high yield according to the formulated composition ratio that can be controlled as desired. The diameter of the alloy particles may be controlled as desired by properly controlling the temperature and stirring rate in the aging.

Preferably, the solution after aging is washed with a mixed solution of water and a primary alcohol, and a precipitate is formed by a precipitation treatment using the primary alcohol, and the precipitate is dispersed in an organic solvent with the organic solvent.

Providing this washing and dispersing permits impurities to be removed, and applicability for forming the magnetic layer of the magnetic recording medium is improved.

The washing and dispersion is applied once, preferably twice or more.

While the primary alcohol used for washing is not particularly restricted such as methanol and ethanol are preferable. The mixing ratio (water/primary alcohol, volume ratio) is preferably in a range from 10/1 to 2/1, more preferably in a range from 5/1 to 3/1. Adjusting the mixing volume ratio in a range from 10/1 to 2/1 permits the surfactant to be readily removed to enable coagulation to be suppressed from occurring.

The alloy particles dispersed in a solution (an alloy particle-containing solution) is obtained as described above.

Since the alloy particles are monodisperse particles, they are not coagulated by applying on the substrate, and maintain their uniformly dispersed state. Accordingly, the alloy particles can be efficiently magnetized since they are not coagulated by the annealing treatment with good applicability.

While the diameter of the alloy particles before an oxidation treatment to be described below is preferably small for lowering the noise level, the particles become super paramagnetic after annealing when the particle diameter is too small to make the particles not suitable for magnetic recording. The particle diameter is preferably 1 to 100 nm, more preferably 1 to 20 nm, and particularly 3 to 10 nm.

Reducing method

While various methods have been used for producing the alloy particles capable of forming the ferromagnetic ordered alloys having a CuAu or $Cu_3Au$ crystal structure have been known, preferably applicable method comprises reducing a metal having a lower redox potential (referred to a noble metal hereinafter) and a metal having a higher redox potential (referred to a base metal hereinafter) are reduced in an organic solvent or water, or in a mixed solvent of water and an organic solvent, using a reductant.

The order of reduction between the noble metal and base metal is not particularly restricted, and both metals may be simultaneously reduced.

Alcohols and polyalcohols may be used as the organic solvents above. Examples of the alcohol include methanol, ethanol and butanol, Examples of the polyalcohol include ethyleneglycol and glycerin.

The ferromagnetic ordered alloys having a CuAu or $Cu_3Au$ crystal structure obtained by the reducing method is the same as that obtained by the inverse micelle method.

The methods described in Japanese Patent Application No. 2001-269255, paragraph No. 18 to 30 may be applied for preparing the alloy particles by permitting the base metal first.

Pt, Pd and Rh can be preferably used as the metal having a high redox potential, and compounds such as $H_2PtCl_6 \cdot 6H_2O$, $Pt(CH_3COCHCOCH_3)_2$, $RhCl_3 \cdot 3H_2O$, $Pd(OCOCH_3)_2$, $PdCl_2$ and $Pd(CH_3COCHCOCH_3)_2$ may be used by dissolving in a solvent. The concentration of the metal in the solution is preferably 0.1 to 1,000 µmol/ml, preferably 0.1 to 100 µmol/ml.

Co, Fe, Ni and Cr, particularly Fe and Co, can be preferably used as the metal having a low redox potential, and compounds such as $FeSO_4 \cdot 7H_2O$, $NiSO_4 \cdot 7H_2O$, $CoCl_2 \cdot 6H_2O$ and $Co(OCOCH_3)_2 \cdot 4H_2O$ may be used by dissolving in a solvent. The concentration of the metal in the solution is preferably 0.1 to 1,000 µmol/ml, preferably 0.1 to 100 µmol/ml.

It is preferable to reduce the transformation temperature to the ferromagnetic ordered alloy by adding a third element in the binary alloy as in the inverse micelle method. The amount to be add is also the same as in the inverse micelle method.

For example, it is preferable that the low potential metals, or the low potential metals and a part of the high potential meals are reduced using a reductant having a lower redox potential than -0.2 V (vs. N.H.E), the reduced metals are added to a high potential metal source to reduce the high potential metals by adding a reductant having a higher redox potential than -0.2 V (vs. N.H.E), and the remaining high potential metals are reduced by adding a reductant having a lower redox potential than -0.2 V (vs. N.H.E), when the low potential metals and high potential metals are precipitated by reduction in this order.

While the redox potential depends on the pH of the solution, alcohols such as 1,2-hexadecanediol, glycerin, $H_2$ and HCHO are preferably used for the reductant having a higher redox potential than -0.2 V (vs. N.H.E).

$S_2O_6^{2-}$, $H_2PO_2^-$, $BH_4^-$, $N_2H_5^+$ and $H_3PO_3^-$ are preferably used for the reductant having a lower redox potential than -0.2 V (vs. N.H.E).

No special reductant of metals is not needed when zero-valent metals such as Fe-carbonyl are used as the starting materials of the base potential metals.

The alloy particles can be stably prepared by adding an adsorbent for precipitating high potential metals by reduction. Polymers and surfactants are preferably used as the adsorbent.

Examples of the polymer include polyvinyl alcohol (PVA), poly-N-vinyl-2-pyrroridone PVP) and gelatin. PVP is particularly preferable among them.

The molecular weight of the polymer is preferably 20,000 to 60,000, more preferably 30,000 to 50,000. The amount of the polymer is preferably 0.1 to 10 times, more preferably 0.1 to 5 times, of the mass of the alloy particles formed.

The surfactant preferably used as the adsorbent preferably contains an "organic stabilizer" as a long chain organic compound represented by a Formula of R-X. R in the Formula is a "tail group" as a straight chain hydrocarbon, a branched hydrocarbon or fluorocarbon chain, and usually contains 8 to 2 carbon atoms. X in the Formula is a "head group" as a part (X) that provides a specific chemical bond on the surface of the alloy particles, and is preferably any one of sulfinate (-SOOH), sulfonate (-$SO_2$OH), phosphinate (-POOH), phosphonate (-OPO(OH)$_2$), carboxylate and thiol.

The organic stabilizer is preferably any one of sulfonic acid (R-$SO_2$OH), sulfinic acid (R-SOOH), phosphinic acid ($R_2$POOH), phosphonic acid (R-OPO(OH)$_2$), carboxylic acid (R-COOH) and thiol (R-SH). Oleic acid is preferable among them as in the inverse micelle method.

A combination of the phosphine and organic stabilizer (such as triorgano-phosphine/acid) can afford excellent controllability to growth and stability of the particles. While didecylether and didodecylether are also available, phenylether or n-octylether is favorably used as a solvent since it is inexpensive and has a high boiling point.

The reaction is preferably performed in a temperature range of 80 to 360°C, more preferably 80 to 240°C, depending on the require alloy particles and boiling point of the solvent. A temperature range of 80 to 360°C enables growth of the particles to be accelerated while undesirable by-products are suppressed from being formed.

The diameter of the alloy particles is the same as that in the inverse micelle method, and is preferably 1 to 100 nm, more preferably 3 to 20 nm, and particularly 3 to 10 nm.

A seeding method is effective for increasing the particle size (particle diameter). It is preferable for increasing the recording capacity of the magnetic recording medium to put the alloy particles into a close-packed state. Accordingly, the standard deviation of the alloy particle size is preferably less than 10%, and more preferably less than 5%. The variation coefficient of the particle size is preferably 10% or less, more preferably 5% or less.

Too small particle size is not preferable since the particles become super paramagnetic. Accordingly, the seeding method is preferably used in order to increase particle size. However, since metals having a higher redox potential than the metals constituting the particles may be precipitated and the precipitated metals may be oxidized, the particles are previously subjected to hydrogenation.

While it is preferable that the outermost layer of the alloy particles comprise the noble metals for preventing oxidation, an alloy of the noble metals and base is preferably used in the invention in order to preventing the particles from being coagulated. Such construction of the particles may be readily and efficiently realized by the liquid phase method as described above.

The solution after forming the alloy particles is preferably desalted for improving dispersion stability of the alloy particles. Desalting is possible by adding an excess amount of an alcohol to allow the particles to be slightly coagulated followed by removing the salts together with the supernatant by spontaneous sedimentation or centrifugal sedimentation. However, an ultrafiltration method is preferably used since the sedimentation method tends to form coagulation.

The alloy particles dispersed in the solvent (alloy particle-containing solution) is obtained as described above.

A matrix agent is added in the alloy particle-containing solution obtained to prepare a coating solution (magnetic layer coating solution) for forming the magnetic layer. Various additives may be added, if necessary. While at least one of the matrix agents are added, the content is preferably 0.007 to 1.0 μg/ml. More preferably 0.01 to 0.7 μg/ml.

A transmission electron microscope (TEM) is used for measuring the diameter of the alloy particles. While electron diffraction using TEM may be used for determining the crystal system of the alloy particles or magnetic particles, use of X-ray diffraction is preferable due to its high accuracy. The composition of the inside of the alloy particles or magnetic particles is preferably analyzed by FE-TEM (field emission transmission electron microscope) equipped with EDAX that permit the electron beam to be finely converged. Magnetic properties of the alloy particles or magnetic particles can be evaluated using VSM.

Oxidation treatment

Oxidizing the alloy particles prepared permits the ferromagnetic particles to be efficiently produced without increasing the annealing temperature in a non-oxidative atmosphere to be applied hereinafter. This is conjectured to be caused by the phenomenon described below.

Oxygen invades into the crystal lattice by oxidizing the alloy particles. Oxygen invaded in the crystal lattice is eliminated by heat by annealing. Crystal defects are formed by eliminating oxygen, and displacement of the metal atoms constituting the alloy is facilitated through the crystal defects. Consequently, phase transformation is conjectured to readily occur at a relatively low temperature.

Such phenomenon may be speculated by a EXAFS (extended X-ray absorption fine structure) measurement of the alloy particles after oxidation and the magnetic particles after annealing.

Bonds between Fe atoms and Pt atoms or Fe atoms are confirmed to exist in the alloy particles before oxidizing with Fe-Pt particles.

On the contrary, bonds between the Fe atoms and oxygen atoms are confirmed in the alloy particles after oxidation. However, substantially no bonds between the Pt atoms and Fe atoms are observed. This means that the bonds of Fe-Pt and Fe-Fe are broken by the oxygen atoms, and the Pt atoms and Fe atoms became readily movable by annealing.

No oxygen is detected to exist after annealing the alloy particles, and the bonds between Fe atoms and Pt or Fe are confirmed around Fe atoms.

It may be comprehended from the phenomenon above that the annealing temperature is forced to be increased unless the particles are oxidized since phase transformation hardly occurs. However, excessive oxidation may result in formation of metal oxides since readily oxidized metals such as Fe too strongly interacts with oxygen by excessive oxidation.

Accordingly, it is important to control the oxidation state of the alloy particles, and a proper oxidation condition should be selected for this purpose.

A gas at least containing oxygen may be supplied to the alloy particles-containing solution or magnetic layer coating solution after preparation when the alloy particles are prepared by the liquid phase method.

The partial pressure of oxygen is preferably 10 to 100%, more preferably 15 to 50%, of the total pressure.

The oxidation temperature is preferably 0 to 100°C, more preferably 15 to 80°C.

The oxidation state of the alloy particles is preferably determined by EXAFS. The number of bonds between the base metal such as Fe and oxygen is preferably 0.5 to 4, more preferably 1 to 3, from the viewpoint of breaking the Fe-Fe bond and Pt-Fe bond with oxygen.

The oxidation treatment may be applied by coating or fixing the alloy particles on the substrate in air at room temperature (0 to 40°C). Coagulation of the alloy particles is prevented by oxidizing the particles after coating on the substrate. The oxidation time is preferably 1 to 48 hours, more preferably 3 to 24 hours.

Annealing

The alloy particles after oxidation has a random phase. Ferromagnetism cannot be obtained in the random phase as described above. Accordingly, the ally particles are annealed for transferring into an ordered phase. The transformation temperature of the alloy constituting the alloy particles into the ordered phase is determined by differential thermal analysis (DTA), and the alloy is annealed at a temperature above the transformation temperature.

While the transformation temperature is usually about 500°C, the temperature may be decreased by adding a third element. The transformation temperature can be also decreased by appropriately changing the atmosphere for oxidation and annealing. Accordingly, the annealing temperature is preferably 150°C or more, more preferably 150 to 450°C.

Representative examples of the magnetic recording medium include magnetic recording tapes and floppy (R) disks. The former is processed into a tape, and the latter is punched into a disk after forming the magnetic layer on a web of an organic substrate. Using the organic substrate is effective in the invention for decreasing the transformation temperature to ferromagnetic state, and the magnetic particles are preferably used in such embodiment.

A shorter annealing time is more preferable for annealing on the web, since a long period of time requires a long size apparatus. Fir example, when the convey speed of the web is 50 m/min and annealing time is 30 minutes, a length of 1500 m is necessary as the line length. Accordingly, the annealing time is preferably 10minutes or less, more preferably 5 minutes or less, in the method for producing the magnetic particles in the invention.

The annealing atmosphere is preferably a reducing atmosphere as will be described below for shortening the annealing time as described above. This is effective for preventing deformation of the substrate as well as for preventing impurities from being dispersed from the substrate.

The particles are liable to be fused due to easy displacement of the particles when the particles are directly annealed. Therefore, the particle size tends to be increased, although a high coercive force is obtained. Accordingly, annealing is preferably applied by applying the particles on the substrate for preventing the alloy particles from being coagulated.

The magnetic recording medium comprising the magnetic layer having the magnetic particle layer may be provided by transforming the alloy particles into magnetic particles by annealing on the substrate.

Either inorganic substances or organic substances may be used as the substrate so long as they are available as the substrate used for the magnetic recording medium.

Examples of the inorganic substrate available include Mg alloys such as Al, Al-Mg, Mg-Al-Zn alloys, glass, quartz, carbon, silicon and ceramics. These substrates are excellent in impact resistance, and has a rigidity suitable for thinning and high speed rotation. The substrate is resistant to heat as compared with the organic substrate.

Examples of the organic substrate available include polyesters such as polyethylene terephthalate and polyethylene naphthalate; and polyolefins, cellulose triacetate, polycarbonate, polyamide (including aliphatic polyamide and aromatic polyamide such as aramid), polyimide, polyamideimide, polysulfone and polybenzoxazole.

The magnetic layer coating solution after subjecting to the oxidation treatment above may be applied on the substrate for coating the substrate with the alloy particles.

The content of the alloy particles is preferably a desired concentration (0.01 to 0.1 mg/ml).

The coating method on the substrate available include air doctor coat, blade coat, rod coat, extrusion coat, air knife coat, squeeze coat, dip coat, reverse coat, transfer roll coat, gravure coat, kiss coat, cast coat, spray coat and spin coat methods.

A non-oxidative atmosphere such as $H_2$, $N_2$, Ar, He and Ne is used as the annealing atmosphere for permitting phase transformation to be efficiently proceeded and for preventing the alloy from being oxidized.

A reducing atmosphere such as methane, ethane and $H_2$ is particularly preferable for eliminating oxygen on the crystal lattice by oxidation. The annealing treatment is also preferably applied in a reducing atmosphere for maintaining the particle diameter. An inert gas is preferably mixed in the $H_2$ atmosphere for preventing explosion.

Annealing is applied in an inert gas at a temperature of a transformation temperature or less for preventing the particles from being fused by annealing. Annealing is preferably applied at a temperature of the transformation temperature in the reducing atmosphere after carbonizing the dispersant. A Si resin is coated on the layer comprising the alloy particles, if necessary, after the annealing treatment at a temperature of the transformation temperature or less, and annealing is applied at a temperature above the transformation temperature in the most preferable embodiment.

The alloy particles are transformed from the random phase to the ordered phase by applying the annealing treatment as described above to enable the ferromagnetic particles.

The magnetic particles produced as described above preferably have a coercive force of 95.5 to 398 kA/m (1,200 to 5,000 Oe), and a coercive force of 95.5 to 278.6 kA/m (1,200 to 3,500 Oe) is more preferable considering application to the magnetic recording medium.

The particle diameter of the magnetic particles is preferably 1 to 100 nm, more preferably 3 to 20 nm, and particularly 3 to 10 nm.

The magnetic recording medium of the invention is produced by forming the protective layer and lubricant layer after forming the magnetic layer on the substrate.

A method for forming the alloy layer by precipitating a desired alloy on the substrate may be employed as the method for forming a layer (alloy layer) comprising the ferromagnetic ordered alloys having a CuAu or $Cu_3Au$ crystal structure before forming the magnetic layer by annealing. While the method is not particularly restricted, a film forming method by sputtering is preferably used.

The film forming method by sputtering includes "RF magnetron sputtering method (RF sputtering method hereinafter) ", "DC magnetron sputtering method (DC sputtering method hereinafter)" and "reactive sputtering method". Any method may be used.

An alloy layer having a structure in which the magnetic crystal grains are surrounded by crystal grains of a nonmagnetic material such as oxides and nitrides (granular structure) is formed by the sputtering film forming

The film forming by sputtering on the substrate may be oxidized (oxidation by exposing in air) or annealed as described above.

EXAMPLE

While the invention is described in detail with reference to examples, the present invention is by no means restricted to these examples.

Example 1

The following procedure was carried out in high purity $N_2$ gas.

In a reductant solution prepared by dissolving 0.76 g of $NaBH_4$ (manufactured by Wako Pure Chemical Industries, Inc.) in 16 ml of water (de-oxygenated to 0.1 mg/liter), an alkane solution prepared by mixing 10.8 g of aerosol OT (di-2-ethylhexyl sodium sulfosuccinate, manufactured by Wako Pure Chemical Industries, Inc.), 80 ml of decane and 2 ml of oleilamine (manufactured by Tokyo Kasei Kogyo, Co.) was added to prepare an inverse micelle solution (I).

Into an aqueous metal salt solution prepared by dissolving 0.46 g of iron trioxalate triammonium ($Fe(NH_4)_3$ $(C_2O_4)_3$), manufactured by Wako Pure Chemical Industries, Inc.), and 0.38 g of potassium chloroplatinate ($K_2PtCl_4$) in 12 ml of water (de-oxygenated to 0.1 mg/liter), an alkane solution prepared by mixing 5.4 g of aerosol OT and 40 ml of decane was mixed to prepare an inverse micelle solution (II).

The inverse micelle solution (II) was momentarily added in the inverse micelle solution (I) at 22°C while stirring the inverse micelle solution (I) at high speed using a Omnimixer (manufactured by Yamato Scientific Co., Ltd.). The solution was aged thereafter by stirring with a magnetic stirrer by heating at 50°C for 60 minutes 10 minutes after the addition.

Further added was 2 ml of oleic acid (manufactured by Wako Pure Chemical Industries, Inc.), and the solution was cooled to room temperature. The aqueous phase and oil phase was separated by adding 100 ml of water and 100 ml of methanol to break the inverse micelle. A dispersion in which the alloy particles are dispersed in the oil phase was obtained. The oil phase was washed with a mixed solution of 600 ml of water and 200 ml of methanol 5 times.

Thereafter the alloy particles were flocculated by adding 1,100 ml of methanol for sedimentation the particles. The supernatant was removed, and the particles were dispersed again by adding 20 ml of heptane (manufactured by Wako Pure Chemical Industries, Inc.).

The procedure of sedimentation by adding 100 ml of methanol and 20 ml of heptane was repeated twice. An alloy particle-containing solution comprising water and a surfactant in a proportion (water/surfactant) of 2 was prepared by finally adding 5 ml of heptane.

The following results were obtained by measuring the yield, composition, volume average particle diameter and distribution (variation coefficient) of the alloy particles obtained.

The composition and yield were determined by ICP spectroscopy (induction coupling plasma spectroscopy).

The volume average particle diameter and particle diameter distribution were determined by a statistical processing after measuring the particles photographed by TEM (transmission electron microscope, manufactured by Hitachi, Ltd.).

The alloy particles used for the measurements were collected from the alloy particle-containing solution prepared, and were used after thoroughly drying by heating in an electric furnace.

Composition: FePt alloy with Pt content of 44.5 at%

Yield: 85%

Average particle diameter: 4.2 nm

Variation coefficient: 5%

The alloy particle-containing solution was concentrated by vacuum degassing so that the content of the alloy particles is 12% by weight. The concentration of the solution was adjusted to 4% by weight by diluting with decane to prepare alloy particle-containing solution A.

A solution (54 μl) prepared by dissolving Toreyfil R910 (trade name, manufactured by Toray Industries, Inc.) as a matrix agent in decane in a concentration of 1% by weight was added in 1 ml of the alloy particle-containing solution. The solution was stirred, and alloy particle-containing solution B was prepared by filtering the solution above with a filter in a clean room.

Application of nonmagnetic layer

A glass substrate for the hard disk (trade name: 65/20-0.635t Glass Polish Subst, manufactured by Toyo Kohan Co.) was washed with methanol, and a 0.05% by weight solution of 3-acryloyloxypropyl trimethoxysilane was applied on the substrate using a spin coater. The thickness of the coating layer was 10 nm. A nonmagnetic layer was formed thereafter by heating at 150°C for 25 minutes.

Preparation of magnetic layer

Alloy particle-containing solution B was applied on the nonmagnetic layer with the spin coater at a thickness of 50nm. The layer was oxidized by exposing air for 2 hours after coating.

The coating layer was heated in an electric furnace (450°C) for 30 minutes in a mixed gas atmosphere of $H_2$ and Ar ($H_2$:Ar = 5:95) at a heating rate of 50°C/min after oxidation. The layer was cooed to room temperature at a cooling rate of 50°C/min for annealing, and a magnetic layer (thickness: 50 nm) containing magnetic particles comprising a ferromagnetic ordered alloy in a metal oxide matrix was formed.

Preparation of protective layer

A protective layer of carbon was formed on the magnetic layer by 400 W of Rf sputtering at an energy of 400W after annealing. The thickness of the protective layer was 10 nm.

Varnish treatment

The surface of the protective layer was subjected to a varnish treatment by rotating the substrate at 7,200 rpm using a varnish head described below.
Specification of varnish head (manufactured by Glide Signus Co.)
Slider: 24 pads
Load: 5 g
Suspension: Type 2030
Z-height: 29 mil (0.7366 mm)

Preparation of lubricant layer

The surface of the substrate was washed with a fluorine inert liquid (trade name: Florinate, manufactured by Sumitomo 3M Ltd.) and dried.

A solution prepared by dissolving FOMBLIN®Z sol (manufactured by Ausimony KK.) in a solvent (trade name: Florinate, manufactured by Sumitomo 3M Ltd.) in a concentration of 1% by weight was applied on the substrate by pulling up from the solution at a rate of 10 mm/min using a dip coater. A lubricant layer was formed on the protective layer to manufacture a magnetic recording medium.

Example 2

A magnetic recording medium was prepared by the same method as in Example 1, except that the protective layer was formed of $SiO_2$.

Example 3

A magnetic recording medium was prepared by the same method as in Example 1, except that the nonmagnetic layer was not formed.

Example 4

A magnetic recording medium was prepared by the same method as in Example 2, except that the nonmagnetic layer was not formed.

Comparative Example 1

A magnetic recording medium was prepared by the same method as in Example 1, except that the magnetic layer was formed using the alloy particle-containing solution A.

Comparative Example 2

A magnetic recording medium was prepared by the same method as in Example 1, except that the lubricant layer was not formed.

Comparative Example 3

A magnetic recording medium was prepared by the same method as in Example 1, except that the protective layer was not formed.

Evaluation

Magnetic characteristics were evaluated with respect to the magnetic recording medium in Examples 1 to 4 and Comparative Examples 1 to 3. The volume average particle diameter was measured by scratching off the magnetic particles from the magnetic layer of each magnetic recording medium using a spatula. The results are shown in Table 1 below.

The magnetic characteristics (coercive force) of the magnetic layer were measured together with the magnetic recording medium. The coercive force was measured using a high sensitivity magnetization spectrometer and data processing unit (manufactured by Toei Industry Co., Ltd.) under an applied magnetic field of 790 kA/m (10 kOe).

The volume average particle diameter was measured using TEM at an acceleration voltage of 300 kV.

Electromagnetic conversion characteristics were evaluated with respect to each magnetic recording medium. The electromagnetic conversion characteristics were evaluated by recording and generating the data at a position of the medium diameter of 25 mm using a Spin Stand LS90 (trade name, manufactured by Toei Industry Co., Ltd.) and a ring head. The writing current was 10 mA, and the rotation speed of the recording medium was 7,200 rpm.

The electromagnetic conversion characteristics were evaluated with relative value of reproduction signal at the time when being recorded with 10 MHz of recording signal.

The electromagnetic conversion characteristics were evaluated relative to other electromagnetic recording media by evaluating the electromagnetic medium in Example 1 as 100. The results are also shown in Table 1.

Table 1

| | Example 1 | Example 2 | Example 3 | Example 4 | Comparative example 1 | Comparative example 2 | Comparative example 3 |
|---|---|---|---|---|---|---|---|
| Nonmagnetic layer | Yes | Yes | Yes | Yes | Yes | Yes | Yes |
| Alloy particle containing solution | B | B | B | B | A | B | B |
| Protective layer | C | SiO2 | C | SiO2 | C | C | None |
| Lubricant layer | Yes | Yes | Yes | Yes | Yes | None | Yes |
| Particle diameter after annealing (nm) | 5 | 5 | 5 | 5 | 30 | 5 | 5 |
| Hc after annealing (kA/M) | 237 | 240.95 | 158 | 150.1 | 233.05 | 237 | 244.9 |
| Hc after annealing (oe) | 3000 | 3050 | 2000 | 1900 | 2950 | 3000 | 3100 |
| Electromagnetic conversion characteristics | 100 | 90 | 50 | 40 | -*1) | -*1) | -*1) |

*1) Measurement was impossible due to cracks at a part of the magnetic layer

Table 1 shows that, while good electromagnetic conversion characteristics were obtained in the magnetic recording media in Examples 1 to 4, adhesion and film strength were poor in the magnetic recording media in Comparative Examples 1 to 3. Measurements were impossible due to generation of cracks in a part of the magnetic recording media.

**Claims**

1.  A magnetic recording medium sequentially comprising a magnetic layer, a protective layer and a lubricant layer, on a substrate,
    the magnetic layer containing magnetic particles comprising ferromagnetic ordered alloys having a CuAu or $Cu_3Au$ crystal structure in a metal oxide matrix.

2.  A magnetic recording medium according to claim 1, wherein the protective layer contains at least one of carbon and silicon.

3.  A magnetic recording medium according to claim 1, wherein the lubricant layer contains fluorine.

4.  A magnetic recording medium according to claim 2, wherein the lubricant layer contains fluorine.

5.  A magnetic recording medium according to claim 1, wherein a nonmagnetic layer containing at least one selected from the group consisting of a metal alkoxide compound, a metal phenoxide compound and a coupling agent is formed between the substrate and the magnetic layer.

6.  A magnetic recording medium according to claim 2, wherein a nonmagnetic layer containing at least one selected from the group consisting of a metal alkoxide compound, a metal phenoxide compound and a coupling agent is formed between the substrate and the magnetic layer.

7.  A magnetic recording medium according to claim 3, wherein a nonmagnetic layer containing at least one selected from the group consisting of a metal alkoxide compound, a metal phenoxide compound and a coupling agent is formed between the substrate and the magnetic layer.

8.  A magnetic recording medium according to claim 1, wherein the metal oxide matrix is nonmagnetic.

9.  A magnetic recording medium according to claim 8, wherein the nonmagnetic metal oxide matrix is at least one selected from the group consisting of silica, titania, and polysiloxane.

10. A magnetic recording medium according to claim 1, wherein the metal oxide matrix accounts for 1 to 50% by volume of a total volume of the magnetic particles.

**European Patent Office**

# EUROPEAN SEARCH REPORT

Application Number

EP 04 01 8298

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | EP 1 357 544 A (FUJI) 29 October 2003 (2003-10-29) * page 11, line 1 - line 25; claims 1,4,5,7,9,10,18 * | 1-4,8-10 | G11B5/706 |
| X | US 5 843 569 A (KAITSU ET AL.) 1 December 1998 (1998-12-01) | 1,2,8-10 | |
| Y | * column 2, line 40 - column 3, line 19 * | 3-7 | |
| X | US 2001/006435 A1 (ICHIHARA ET AL.) 5 July 2001 (2001-07-05) * paragraph [0246] * | 1,2,8-10 | |
| X | US 2001/006436 A1 (AKIYAMA ET AL.) 5 July 2001 (2001-07-05) * paragraphs [0190] - [0192] * | 1,2,8-10 | |
| X | US 2001/051287 A1 (KIKITSU ET AL.) 13 December 2001 (2001-12-13) * paragraphs [0314], [0315] * | 1,2,8-10 | TECHNICAL FIELDS SEARCHED (Int.Cl.7) |
| Y | US 6 120 836 A (USUKI) 19 September 2000 (2000-09-19) * column 10, line 15 - column 11, line 35; claims 10,29,31 * | 3-7 | G11B |

The present search report has been drawn up for all claims

| Place of search | Date of completion of the search | Examiner |
|---|---|---|
| The Hague | 4 November 2004 | Magrizos, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 01 8298

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2004

| Patent document cited in search report | | Publication date | Patent family member(s) | | Publication date |
|---|---|---|---|---|---|
| EP 1357544 | A | 29-10-2003 | JP<br>EP<br>US | 2004005937 A<br>1357544 A2<br>2003203242 A1 | 08-01-2004<br>29-10-2003<br>30-10-2003 |
| US 5843569 | A | 01-12-1998 | JP | 10092637 A | 10-04-1998 |
| US 2001006435 | A1 | 05-07-2001 | JP<br>US | 2001250201 A<br>2004184361 A1 | 14-09-2001<br>23-09-2004 |
| US 2001006436 | A1 | 05-07-2001 | JP | 2001189002 A | 10-07-2001 |
| US 2001051287 | A1 | 13-12-2001 | JP | 2002358616 A | 13-12-2002 |
| US 6120836 | A | 19-09-2000 | JP<br>JP | 8185619 A<br>8241517 A | 16-07-1996<br>17-09-1996 |

EPO FORM P0459

For more details about this annex : see Official Journal of the European Patent Office, No. 12/82